# FASCICULE DE BREVET EUROPEEN

(11) **EP 2 941 657 B1**
(45) Date de publication et mention de la délivrance du brevet: **28.09.2016**
(21) Numéro de dépôt: 14700069.9
(22) Date de dépôt: 06.01.2014
(51) Int. Cl.: G01T 1/20, G01T 3/06

(54) **SCINTILLATEUR POUR LA DETECTION DE NEUTRONS ET/OU DE PHOTONS GAMMA ET DETECTEUR ASSOCIE**
SZINTILLATOR ZUR ERKENNUNG VON NEUTRONEN UND/ODER GAMMAPHOTONEN UND DAMIT ASSOZIIERTER DETEKTOR
SCINTILLATOR FOR DETECTING NEUTRONS AND/OR GAMMA PHOTONS AND ASSOCIATED DETECTOR

(30) Priorité: 07.01.2013 FR 1350084
(43) Date de publication de la demande: 11.11.2015
(73) Titulaire: Commissariat à l'Énergie Atomique et aux Énergies Alternatives, 75015 Paris (FR)
(72) Inventeur: KONDRASOVS, Vladimir, F-91120 Palaiseau (FR); COULON, Romain, F-58400 Chaulgnes (FR); NORMAND, Stéphane, F-50540 Isigny Le Buat (FR); BOUDERGUI, Karim, F-28630 Nogent-le-Phaye (FR)
(74) Mandataire: Brevalex
(86) Numéro de dépôt international: PCT/EP2014/050074
(87) Numéro de publication internationale: WO 2014/106652

(56) Documents cités:
- WO-A1-2012/133796
- US-A1- 2004 262 530
- US-A1- 2011 163 237
- US-A1- 2011 204 243
- US-A1- 2011 291 014
- M. HAMEL ET AL.: "N-(2',5'-di-t-butylphenyi)-4-ethoxy-1,8-n ophtholimide: A new fluorophore highly efficient for fast neutrons/gamma-rays discrimination in liquid media", NUCLEAR INSTRUMENTS AND METHODS IN PHYSICS RESEARCH A, vol. 602, 12 février 2009 (2009-02-12), pages 425-431, XP026080423, cité dans la demande

## Description

### Domaine technique et art antérieur

L'invention concerne un scintillateur pour la détection de neutrons et/ou de photons gamma. L'invention concerne également un détecteur de neutrons et/ou de photons gamma qui comprend un scintillateur selon l'invention.

L'invention s'applique, par exemple, dans le domaine médical, dans le domaine de la sécurité, de la radioprotection ou encore du démantèlement d'infrastructures nucléaires.

Lors d'une attaque terroriste ou lors du démantèlement d'infrastructures nucléaires, il est essentiel de surveiller et de caractériser la radioactivité ambiante. La radioactivité ambiante est alors une radioactivité mixte composée de neutrons de fission et de rayonnements gamma. Alors qu'il est facile de mesurer les rayonnements gamma, les neutrons de fission sont difficiles à mesurer du fait de la prédominance des rayonnements gamma et de la similarité des domaines d'énergie concernés entre neutrons et rayonnements gamma.

Une approche habituelle de la détection neutronique consiste en la mise au point de composants maximisant la section-efficace d'interaction des neutrons par rapport à la section efficace d'interaction des photons. Le critère de conception des détecteurs est alors l'utilisation de matériaux scintillateurs dopés (le matériau lui-même, les dopants ou les couvertures) possédant une section efficace de capture élevée pour les neutrons. Par scintillateur « dopé», il faut entendre que le matériau qui constitue le scintillateur contient des dopants propres à la détection neutronique.

Les section-efficaces de capture neutroniques les plus importantes sont atteintes pour les réactions de capture sur les noyaux comme l'hélium 3 (n,p), le bore 10 (n,α), le lithium 6 (n,α), voire même l'uranium 235 (n,f). Toutefois l'exploitation de ces réactions nécessite une thermalisation préalable des neutrons par l'utilisation d'une quantité conséquente de matériaux fortement hydrogénés, par exemple, une sphère en matière hydrogénée de type sphère de Bonner (polyéthylène ou en paraphine). Ces systèmes mesurent donc des neutrons thermiques. La demande de brevet US 2011/0291014 divulgue un tel système. La sensibilité aux neutrons d'émission de ces systèmes n'est améliorée qu'au prix d'un encombrement important. Il en résulte en effet des détecteurs de neutrons de grandes dimensions (typiquement 25cm de diamètre) et lourd (typiquement une dizaine de kilogrammes).

Une autre approche consiste en la détection de protons de recul consécutifs au ralentissement des neutrons rapides dans de la matière hydrogénée. Des scintillateurs organiques, liquides ou plastiques, sont utilisés pour cette technique. Du fait du dépôt linéique d'énergie différent entre les électrons de recul et les protons de recul, la discrimination des neutrons est basée sur les différences de peuplements des états d'excitations triplets par rapport aux états singulets des fluorophores incorporés aux cristaux scintillateurs. La durée de relaxation de la fluorescence étant différente suivant les états d'excitation, il est possible de mettre en oeuvre une discrimination par l'analyse de la forme des impulsions. Ces méthodes sont particulièrement efficaces et éprouvées pour les scintillateurs liquides [Cf. « N-(2',5'-di-t-butylphenyl)-4-ethoxy-1,8-naphthalimide: A new fluorophore highly efficient for fast neutrons/gamma-rays discrimination in liquid media » / Nuclear Instruments and Methods in Physics Research A, 602:425-431, 2009.].

Les scintillateurs liquides sont toutefois trop contraignants pour un système à usage portable dans lequel l'étanchéité doit être impérativement garantie afin d'éviter les fuites du liquide qui est à la fois toxique et inflammable. Les scintillateurs liquides posent également le problème de la détérioration rapide de leurs performances avec le temps (propension à l'absorption d'agent comme l'oxygène requérant de fréquents dégazages).

D'autres systèmes de détection sont connus (mesure de temps de vols entre deux détecteurs, systèmes à détection par coïncidence double ou triple, etc.) qui permettent une discrimination des neutrons par rapport aux rayonnements gamma. Toutefois, ces systèmes de détection ont une consommation en énergie importante et ont une faible efficacité de détection, ce qui les rend incompatibles avec la réalisation d'un système à usage portable.

Le système de détection de neutrons de l'invention ne présente les inconvénients mentionnés ci-dessus.

### Exposé de l'invention

En effet, l'invention concerne un scintillateur pour la détection de neutrons et/ou de photons gamma, caractérisé en ce qu'il comprend une structure constituée de deux matériaux plastiques non dopés qui contiennent des complexes fluorescents différents, un premier matériau plastique non dopé contenant au moins un complexe fluorescent apte à produire une lumière de fluorescence ayant un premier temps de relaxation et le deuxième matériau plastique non dopé contenant au moins un complexe fluorescent apte à produire une lumière de fluorescence ayant un deuxième temps de relaxation supérieur au premier temps de relaxation. De façon préférentielle, le deuxième temps de relaxation est sensiblement supérieur ou égal à dix fois le premier temps de relaxation. Les premier et second matériaux plastiques non dopés sont, par exemple, le polystyrène (PS) ou le polyvinyltoluène (PVT). Par plastique « non dopé », il faut entendre que le plastique ne contient aucun dopant propre à la détection neutronique.

Dans la suite de la description, les expressions « matériau scintillateur » et « matériau fluorescent » doivent être comprises comme « matériau plastique non dopé pour la détection neutronique et contenant un (des) complexe(s) fluorescent(s) ».

Selon un premier mode de réalisation de l'invention, les deux matériaux scintillateurs sont agencés sous la forme d'un empilement de couches successives, une couche de l'un des deux matériaux fluorescents alternant avec une couche de l'autre matériau fluorescent, l'épaisseur de chaque couche de matériau fluorescent étant sensiblement comprise entre 100µm et 500µm.

Selon un deuxième mode de réalisation de l'invention, les deux matériaux scintillateurs sont agencés sous la forme d'un ensemble de micro-billes faites d'un des deux matériaux scintillateurs insérées dans un bloc fait de l'autre matériau scintillateur, les micro-billes définissant une maille cubique à l'intérieur de l'autre matériau scintillateur, un diamètre d'une micro-bille et une distance qui sépare deux micro-billes d'une même maille cubique étant sensiblement comprise entre 100µm et 500µm.

Selon l'invention, la distance sur laquelle les deux matériaux scintillateurs alternent (i.e. l'épaisseur des couches ou le diamètre des micro-billes et la distance qui sépare celles-ci) est sensiblement égale à l'ordre de grandeur du parcours des protons de recul. Un proton de recul dépose ainsi la totalité de son énergie cinétique dans un seul matériau scintillateur alors qu'un électron de recul dépose son énergie cinétique, en alternance, dans les deux matériaux scintillateurs.

Comme cela a déjà été mentionné précédemment, un avantage de l'invention est d'utiliser des matériaux plastiques ayant la même matrice polymère, par exemple du polystyrène (PS) ou du polyvinyltoluène (PVT) et qui n'incorporent aucun dopant propre à la détection neutronique. Afin d'obtenir les temps de relaxation différents souhaités, les matériaux plastiques contiennent des complexes fluorescents différents.

Comme cela est connu de l'homme de l'art, un complexe fluorescent est le plus souvent une combinaison de fluorophores. Les fluorophores typiquement utilisés dans le cadre de l'invention peuvent être, par exemple, le POPOP (1,4-bis-(2-(5-phenyloxazolyl)benzene), le PPO (2,5-Diphenyloxazole), le Bis MSB (1,4-Bis(2-methylstyryl)benzol), le Butyl PBD (2,[4-biphenylyl]-5-[4-tert-butylphenyl]-1,3,4-oxadiazole), le p-terphenyl (1,4-Diphenylbenzene), l'Antracène, le DPA (diphenyl antracène), le biphényle, etc.

De façon connue en soi, les complexes fluorescents sont alors choisis pour assurer les temps de relaxation différents souhaités.

L'invention concerne également un détecteur de neutrons et/ou de photons gamma, caractérisé en ce qu'il comprend un scintillateur selon l'invention qui délivre un signal de fluorescence lorsqu'un neutron ou un photon gamma est détecté, un photomultiplicateur qui convertit en impulsion électronique le signal de fluorescence délivré par le scintillateur et un module de discrimination apte à discriminer, à partir de la forme de l'impulsion électronique délivrée par le photomultiplicateur, si un neutron ou un photon gamma a été détecté.

Un avantage de l'invention est de permettre la réalisation d'un détecteur de neutrons portable, de faible consommation électrique et de faible coût de fabrication. Un autre avantage de l'invention est de permette la détection de neutrons rapides sans thermalisation préalable des neutrons.

### Brève description des figures

D'autres caractéristiques et avantages de l'invention apparaîtront à la lecture de la description qui va suivre faite en référence aux figures jointes parmi lesquelles :
- La figure 1 représente un scintillateur pour la détection de neutrons et/ou de photons gamma selon un premier mode de réalisation de l'invention ;
- La figure 2 représente un scintillateur pour la détection de neutrons et/ou de photons gamma selon un deuxième mode de réalisation de l'invention ;
- Les figures 3A et 3B illustrent, respectivement, la détection d'un neutron et la détection d'un photon gamma à l'aide d'un scintillateur tel que représenté en figure 1;
- Les figures 4A et 4B illustrent, respectivement, la détection d'un neutron et la détection d'un photon gamma à l'aide d'un scintillateur tel que représenté en figure 2;
- La figure 5 représente un schéma de principe de détecteur de neutrons et/ou de photons gamma selon l'invention ;
- La figure 6 illustre des résultats de détection de neutrons dans une ambiance mixte neutrons/photons gamma avec un détecteur de l'invention.

Sur toutes les figures, les mêmes références désignent les mêmes éléments.

### Exposé détaillé de mode de réalisation préférentiels de l'invention

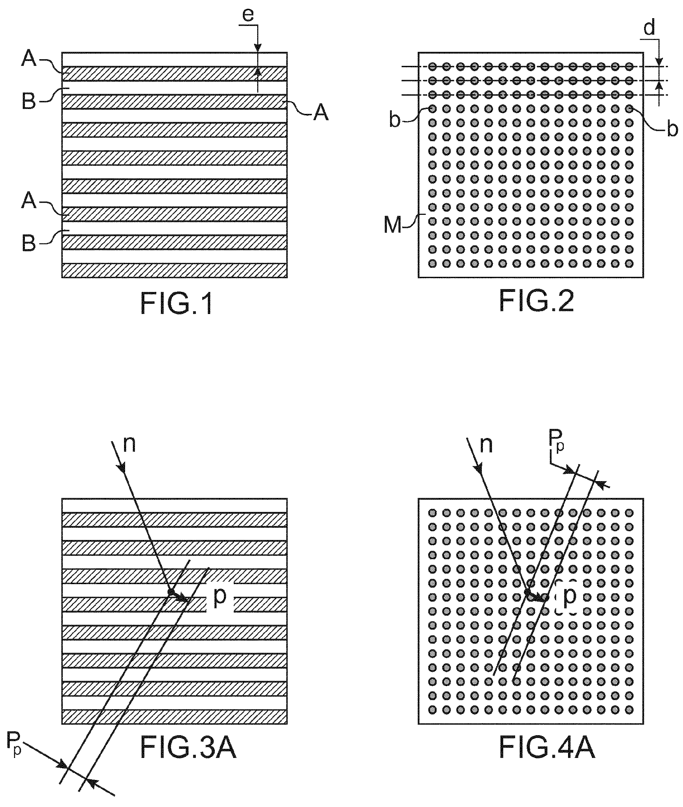

La figure 1 représente un scintillateur pour la détection de neutrons et/ou de photons gamma selon un premier mode de réalisation de l'invention.

Le scintillateur est un scintillateur phoswhich multi-couches (le terme « phoswhich » étant une contraction de l'anglais « phosphor sandwich »). Le scintillateur phoswhich multi-couches est constitué d'un empilement de couches. Les couches sont formées à partir de deux matériaux scintillateurs différents (i.e. matériaux plastiques non dopés pour la détection neutronique et contenant des complexes fluorescents différents), une couche réalisée à partir d'un premier matériau scintillateur A alternant avec une couche réalisée à partir d'un second matériau scintillateur B. Si le premier matériau scintillateur A produit une lumière de fluorescence dont le temps de relaxation est court, alors le second matériau scintillateur B produit une lumière de fluorescence dont le temps de relaxation est long. Réciproquement, si le premier matériau scintillateur A produit une lumière de fluorescence dont le temps de relaxation est long, alors le second matériau scintillateur B produit une lumière de fluorescence dont le temps de relaxation est court. Comme cela a déjà été mentionné précédemment, des complexes fluorescents différents sont choisis, de façon connue en soi, pour assurer les temps de relaxation différents.

Le rapport entre le temps de relaxation long et le temps de relaxation court est préférentiellement supérieur à 10. Ainsi, le temps de relaxation court peut-il être égal à sensiblement 2ns alors que le temps de relaxation long est compris entre 200ns et 300ns. A titre d'exemple non limitatif, le matériau fluorescent dont le temps de relaxation est court est du BC-404 de la marque Saint-Gobain^{®} et le matériau fluorescent dont le temps de relaxation est long est du BC-444 de la marque Saint-Gobain^{®}. L'épaisseur e des couches est, par exemple, égale à 200nm. Le procédé mis en oeuvre pour réaliser l'empilement de couches est connu en soi (procédé de fabrication des détecteurs phoswich). Il consiste, par exemple, à fixer les couches les unes sur les autres à l'aide d'une colle optique.

La figure 2 représente un scintillateur pour la détection de neutrons et/ou de photons gamma selon un deuxième mode de réalisation de l'invention.

Le scintillateur se présente sous la forme de micro-billes b faites d'un premier matériau fluorescent insérées dans un bloc M fait d'un second matériau fluorescent. A titre d'exemple non limitatif, les micro-billes b réparties dans le bloc M définissent un maillage cubique. Selon une première variante du deuxième mode de réalisation de l'invention, les micro-billes sont réalisées avec un matériau fluorescent qui produit une lumière de fluorescence dont le temps de relaxation est court et le bloc M est réalisé avec un matériau fluorescent qui produit une lumière de fluorescence dont le temps de relaxation est long. Selon une deuxième variante du deuxième mode de réalisation de l'invention, ce sont les micro-billes b qui sont réalisées avec un matériau fluorescent qui produit une lumière de fluorescence dont le temps de relaxation est long et le bloc M qui est réalisé avec un matériau fluorescent qui produit une lumière de fluorescence dont le temps de relaxation est court.

Les matériaux fluorescents utilisés dans le deuxième mode de réalisation de l'invention sont identiques aux matériaux utilisés dans le premier mode de réalisation. Le diamètre des micro-billes est, par exemple, égal à 300µm et la distance qui sépare deux micro-billes voisines est par exemple comprise entre 100µm et 500µm.

Le procédé d'insertion des micro-billes b dans le bloc M consiste, tout d'abord, à former une poudre de micro-billes avec un broyeur, puis à incorporer cette poudre dans le bloc M lors de la formation de celui-ci. Il est veillé à ce que la répartition des micro-billes b dans le bloc M se fasse correctement.

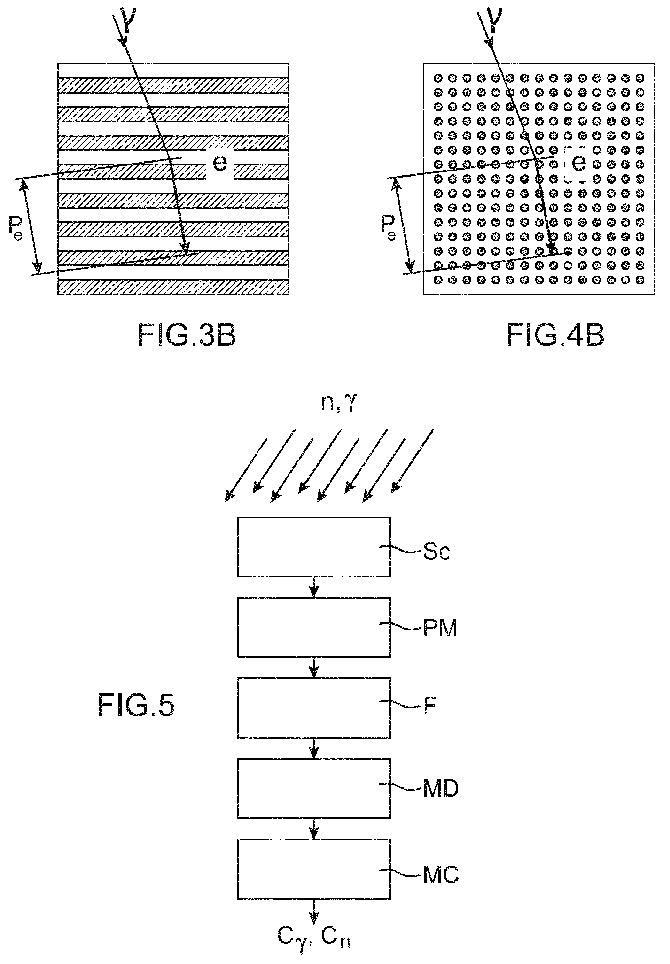

Les figures 3A et 3B illustrent respectivement la détection d'un neutron et la détection d'un photon gamma à l'aide d'un scintillateur tel que représenté en figure 1 et les figures 4A et 4B illustrent respectivement la détection d'un neutron et la détection d'un photon gamma à l'aide d'un scintillateur tel que représenté en figure 2.

Lorsqu'un neutron n est détecté dans un scintillateur de l'invention, un proton de recul p est émis. Il y a alors ionisation du milieu par le proton et création de lumière de fluorescence. Selon l'invention, la portion de matériau fluorescent dans laquelle le proton p est émis (couche A ou B, micro-bille b, ou bloc M) est suffisamment grande par rapport au parcours Pₚ du proton pour que celui-ci y dépose la totalité de son énergie. Dans le cas où le proton de recul est émis dans le matériau qui produit une lumière de fluorescence dont le temps de relaxation est court, le signal de fluorescence est alors constitué d'une impulsion de courte durée et, dans le cas où le proton de recul est émis dans le matériau qui produit une lumière de fluorescence dont le temps de relaxation est long, le signal de fluorescence est constitué d'une impulsion de durée longue. Le signal de fluorescence qui résulte de la détection d'un neutron conduit donc soit à un signal de courte durée, soit à un signal de durée longue.

Lorsqu'un photon gamma est détecté dans un scintillateur de l'invention, un électron de recul est émis. Il y a également ionisation du milieu par l'électron et création de lumière de fluorescence. Selon l'invention, la portion de matériau dans laquelle l'électron est émis est suffisamment petite par rapport au parcours Pₑ de l'électron pour que celui-ci n'y dépose qu'une partie de son énergie et continue sa trajectoire en traversant soit plusieurs couches successives de l'empilement de couches (dans le cas du premier mode de réalisation de l'invention) soit plusieurs alternances bloc M/micro-bille (dans le cas du deuxième mode de réalisation de l'invention). Le signal de fluorescence émis comprend alors une composante de courte durée et une composante de durée longue, ce qui conduit à la formation d'un signal composite formé de la somme d'une impulsion de courte durée et d'une impulsion de durée longue. De façon concrète, la hiérarchie des durées (courte, longue, composite) est définie par des seuils qui permettent de classer la durée des impulsions mesurées.

Le scintillateur de l'invention conduit ainsi avantageusement à la formation de signaux de fluorescence ayant des formes différentes selon qu'une détection de neutron ou une détection de photon gamma est effectuée. C'est cette différence de forme qui est utilisée pour discriminer les neutrons des photons gamma.

Dans le cadre de l'invention, une dissymétrie dans l'alternance fluorescence rapide/fluorescence lente peut être introduite au niveau du scintillateur pour améliorer la discrimination. Par exemple, si les fluorescences lentes ont une plus faible proportion que les fluorescences rapides dans le scintillateur, la contribution lente des photons sera réduite et la discrimination amplifiée. Concrètement, cette dissymétrie est alors réalisée en réduisant l'épaisseur du matériau fluorescent apte à produire une lumière de fluorescence de temps de relaxation long comparativement à l'épaisseur du matériau fluorescent apte à produire une lumière de fluorescence de temps de relaxation court. Cette dissymétrie peut être avantageusement optimisée en fonction des applications concernées et, notamment, en fonction de l'importance ou non du bruit de fond gamma (compromis entre sensibilité et discrimination).

La figure 5 représente un schéma de principe de détecteur de neutrons et/ou de photons gamma selon l'invention. Le détecteur comprend, montés en série, un scintillateur Sc conforme à l'invention, un photomultiplicateur PM, un module de filtrage F, un module de discrimination MD et un module de comptage et de lissage MC.

Le photomultiplicateur PM convertit la lumière délivrée par le scintillateur en électrons et délivre des impulsions électroniques. Le module de filtrage F élimine le bruit présent dans les impulsions électroniques. Le module de discrimination MD met en oeuvre - de façon connue en soi - une technique de discrimination par forme d'impulsion. Chaque impulsion est alors classée en fonction de sa forme. Toute technique choisie parmi les techniques PSD connues à ce jour (PSD pour « Pulses Shape Discrimination ») peut être mise en oeuvre dans le cadre de l'invention.

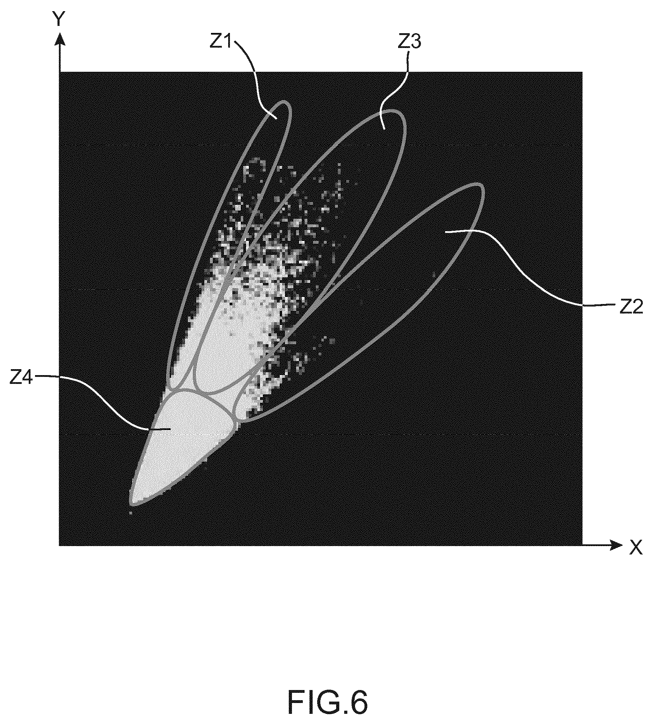

La figure 6 illustre, à titre d'exemple non limitatif, un diagramme de discrimination obtenu par la mise en oeuvre d'une de ces techniques. La source émettrice de neutrons et de photons gamma mesurée est du ²⁵²Cf. Selon la technique de discrimination choisie, chaque impulsion est décomposée, de façon connue en soi, en une composante rapide Pa et une composante lente Pb. Chaque impulsion est ensuite positionnée dans un repère (X, Y), où l'axe des abscisses X est l'axe des composantes lentes et l'axe des ordonnées Y est l'axe des composantes rapides. Quatre zones distinctes apparaissent dans le repère (X, Y) :
- Une première zone Z1 correspond aux impulsions dont la composante rapide est importante et la composante lente est faible ;
- Une deuxième zone Z2 correspond au cas où cas où la composante rapide est faible et la composante lente est importante ;
- Une troisième zone Z3 et une quatrième zone Z4 correspondent au cas où les composantes rapide et lente sont sensiblement identiques.

Les zones Z1 et Z2 rassemblent les impulsions qui correspondent à la détection de neutrons. La zone Z3 rassemble les impulsions qui correspondent à la détection de photons gamma. La zone Z4 rassemble des impulsions de bruit.

Dès lors que les impulsions sont discriminées, le module de comptage et de lissage MC calcule les taux de comptage respectifs Cₙ et C_{γ} pour la détection des neutrons et pour la détection des photons gamma.

## Revendications

1. Scintillateur pour la détection de neutrons et/ou de photons gamma, **caractérisé en ce qu'**il comprend une structure constituée de deux matériaux plastiques (A, B) non dopés pour la détection de neutrons et qui contiennent des complexes fluorescents différents, le premier matériau plastique (A) contenant au moins un complexe fluorescent apte à produire une lumière de fluorescence ayant un premier temps de relaxation et le deuxième matériau plastique (B) contenant au moins un complexe fluorescent apte à produire une lumière de fluorescence ayant un deuxième temps de relaxation supérieur au premier temps de relaxation, les deux matériaux plastiques étant agencés :
- soit sous la forme d'un empilement de couches successives, une couche d'un des deux matériaux plastiques (A, B) alternant avec une couche de l'autre matériau plastique (B, A), chaque couche de matériau plastique ayant une épaisseur sensiblement comprise entre 100µm et 500µm,
- soit sous la forme d'un ensemble de micro-billes (b) faites d'un des deux matériaux plastiques (A, B) insérées dans un bloc (M) fait de l'autre matériau plastique (B, A), les micro-billes (b) insérées dans le bloc (M) définissant une maille cubique, le diamètre des micro-billes (b) étant sensiblement compris entre 100µm et 500µm et deux micro-billes voisines étant séparées d'une distance sensiblement comprise entre 100µm et 500µm.

2. Scintillateur selon la revendication 1, dans lequel le deuxième temps de relaxation est au moins dix fois supérieur au premier temps de relaxation.

3. Scintillateur selon la revendication 1 ou 2, dans lequel les matériaux plastiques sont du polystyrène ou du polyvinyltoluène.

4. Détecteur de neutrons et/ou de photons gamma, **caractérisé en ce qu'**il comprend un scintillateur (Sc) selon l'une quelconque des revendications 1 à 3 qui délivre un signal de fluorescence lorsqu'un neutron ou un photon gamma est détecté, un photomultiplicateur (PM) qui convertit en impulsion électronique le signal de fluorescence délivré par le scintillateur et un module de discrimination (MD) apte à discriminer, à partir de la forme de l'impulsion électronique délivrée par le photomultiplicateur, si un neutron ou un photon gamma a été détecté.

## Patentansprüche

1. Szintillator zur Erkennung von Neutronen und/oder Gammaphotonen, **dadurch gekennzeichnet, dass** er eine Struktur aufweist, die aus zwei nicht dotierten Kunststoffmaterialien (A, B) zur Erkennung von Neutronen besteht, die unterschiedliche, fluoreszierende Komplexe enthalten, wobei das erste Kunststoffmaterial (A) zumindest einen fluoreszierenden Komplex enthält, der dazu geeignet ist, ein Fluoreszenzlicht mit einer ersten Relaxationszeit zu erzeugen, und wobei das zweite Kunststoffmaterial (B) zumindest einen fluoreszierenden Komplex enthält, der dazu geeignet ist, ein Fluoreszenzlicht mit einer zweiten Relaxationszeit zu erzeugen, die höher als die erste Relaxationszeit ist, wobei die beiden Kunststoffmaterialien wie folgt angeordnet sind:
- entweder in Form einer Stapelung von aufeinanderfolgenden Schichten, wobei eine Schicht von einem der beiden Kunststoffmaterialien (A, B) sich mit einer Schicht von dem anderen Kunststoffmaterial (B, A) abwechselt, wobei jede Schicht aus Kunststoffmaterial eine Materialdicke hat, die zwischen 100 µm und 500 µm liegt,
- oder in Form einer Einheit aus Mikrokügelchen (b), die aus einem der beiden Kunststoffmaterialien (A, B) hergestellt sind und in einen Block (M) eingefügt sind, der aus dem anderen Kunststoffmaterial (B, A) hergestellt ist, wobei die in den Block (M) eingefügten Mikrokügelchen (b) ein kubisches Gitter definieren, wobei der Durchmesser der Mikrokügelchen (b) im Wesentlichen zwischen 100 µm und 500 µm beträgt und zwei benachbarte Mikrokügelchen mit einem Abstand im Wesentlichen zwischen 100 µm und 500 µm voneinander getrennt sind.

2. Szintillator nach Anspruch 1, wobei die zweite Relaxationszeit zumindest zehnmal höher als die erste Relaxationszeit ist.

3. Szintillator nach Anspruch 1 oder 2, wobei die Kunststoffmaterialien Polystyrol oder Polyvinyltoluen sind.

4. Sensor für Neutronen und/oder Gammaphotonen, **dadurch gekennzeichnet, dass** er einen Szintillator (Sc) nach einem der Ansprüche 1 bis 3 aufweist, der dann ein Fluoreszenzsignal liefert, wenn ein Neutron oder ein Gammaphoton erkannt wurde, sowie einen Photomultiplier (PM), der das von dem Szintillator gelieferte Fluorezenzsignal in einen elektronischen Impuls umwandelt, und ein Diskrimierungsmodul (MD), das dazu geeignet ist, ausgehend von der Form des von dem Photomultiplier gelieferten elektronischen Impulses zu unterscheiden, ob ein Neutron oder ein Gammaphoton erkannt wurde.

## Claims

1. A scintillator for detecting neutrons and/or gamma photons, **characterised in that** it comprises a structure consisting of two undoped plastic materials (A, B) for detecting neutrons and which contain different fluorescent complexes, the first plastic material (A) containing at least one fluorescent complex able to produce a fluorescence light having a first relaxation time and the second plastic material (B) containing at least one fluorescent complex able to produce a fluorescence light having a second relaxation time higher than the first relaxation time, both plastic materials being arranged:
- either as a stack of successive layers, a layer of one of both plastic materials (A, B) alternating with a layer of the other plastic material (B, A), each layer of plastic material having a thickness substantially between 100µm and 500µm,
- or as a set of micro-beads (b) made of one of both plastic materials (A, B) inserted in a block (M) made of the other plastic material (B, A), the micro-beads (b) inserted in the block (M) defining a cube lattice, the diameter of the micro-beads (b) being substantially between 100µm and 500µm and two neighbouring micro-beads being separated by a distance substantially between 100µm and 500µm.

2. The scintillator according to claim 1, wherein the second relaxation time is at least ten times higher than the first relaxation time.

3. The scintillator according to claim 1 or 2, wherein the plastic materials are polystyrene or polyvinyltoluene.

4. A neutron and/or gamma photon detector, **characterised in that** it comprises a scintillator (Sc) according to any of claims 1 to 3, which delivers a fluorescence signal when a neutron or gamma photon is detected, a photomultiplier (PM) which converts into an electronic pulse the fluorescence signal delivered by the scintillator and a discriminating module (MD) able to discriminate, from the shape of the electronic pulse delivered by the photomultiplier, whether a neutron or a gamma photon has been detected.
